(19) Europäisches Patentamt
European Patent Office
Office européen des brevets

(11) **EP 1 158 405 A1**

(12) **DEMANDE DE BREVET EUROPEEN**

(43) Date de publication:
**28.11.2001 Bulletin 2001/48**

(51) Int Cl.[7]: **G06F 9/46**

(21) Numéro de dépôt: **01401345.2**

(22) Date de dépôt: **22.05.2001**

| | |
|---|---|
| (84) Etats contractants désignés:<br>**AT BE CH CY DE DK ES FI FR GB GR IE IT LI LU MC NL PT SE TR**<br>Etats d'extension désignés:<br>**AL LT LV MK RO SI** | (72) Inventeurs:<br>• **Lenormand, Eric**<br>  **94117 Arcueil Cedex (FR)**<br>• **Bonnot, Philippe**<br>  **94117 Arcueil Cedex (FR)** |
| (30) Priorité: **23.05.2000 FR 0006569** | (74) Mandataire: **Dudouit, Isabelle et al**<br>**Thomsom-CSF** |
| (71) Demandeur: **Thales**<br>**75008 Paris (FR)** | **Propriété Industrielle**<br>**13, avenue Président Salvador Allende**<br>**94117 Arcueil Cedex (FR)** |

(54) **Système et méthode de gestion d'une architecture multi-ressources**

(57) L'invention concerne le domaine des circuits intégrés programmables conçus pour des applications à forte puissance de calcul. Elle propose un système peu complexe et de faible volume permettant de mettre en oeuvre un schéma de planification statique de gestion temps réel des ressources capable de prendre en compte l'acquittement d'une tâche.

Ce système, permettant la gestion d'une architecture multi-ressources, dans laquelle plusieurs tâches peuvent être exécutées simultanément par différentes ressources, comporte :

• au moins un moyen de gestion $G_i^j$ de l'exécution d'une partie j ($0 \leq j$) d'un ensemble ou sous-ensemble i ($0 \leq i$) d'une ou plusieurs tâches,

• au moins un moyen de contrôle $C_i$ du ou des moyens de gestion $G_i^j$ de l'exécution dudit ensemble ou sous-ensemble i de tâches,

• au moins un moyen 8 de vérification de l'acquittement d'une ou plusieurs tâches données, chaque moyen de vérification d'acquittement 8 étant associé à tout ou partie des moyens de gestion $G_i^j$ et/ou tout ou partie des moyens de contrôle $C_i$ et/ou tout ou partie des ressources 6, et/ou

• un moyen d'initialisation 21 permettant d'initialiser tout ou partie des moyens précédents.

Fig. 3

**EP 1 158 405 A1**

**Description**

L'invention concerne le domaine des circuits intégrés programmables de calcul numérique conçus pour des applications à forte puissance de calcul, par exemple: des applications caractérisées par des algorithmes à base de boucles imbriquées dont le déroulement ne dépend pas ou peu des données à traiter. Ce type d'application se rencontre notamment dans les premiers étages de traitement numérique du signal.

Les circuits considérés contiennent plusieurs ressources physiques capables d'exécuter un microprogramme mettant en oeuvre une fonctionnalité particulière telle que, par exemple, un calcul (exécution d'opérations arithmétiques microprogammées sur un ensemble de données) ou un transfert de données (acheminement d'un ensemble de données d'une zone de stockage à une autre zone). Ces ressources physiques fonctionnent en parallèle, exécutant chacune un microprogramme de manière séquentielle ou éventuellement en boucle. Deux modes de gestion de l'exécution d'un programme par ces ressources physiques existent.

Soit un programme unique est déroulé de façon commune. Une seule instruction, contenant un champ (microinstruction) pour chacune des ressources physiques, est active à chaque cycle élémentaire. C'est le cas des architectures VLIW (abréviation anglo-saxonne de Very Long Instruction Word, traduit en français par mot d'instruction très long).

Soit les microprogrammes sont spécifiques aux ressources physiques, ce qui permet aux ressources d'exécuter à leur rythme et, en particulier, de répéter certaines séquences de manière indépendante.

Le second mode est celui choisi par la plupart des processeurs de traitement du signal (DSP, abréviation anglo-saxonne de Digital Signal Processing) car il laisse une plus grande souplesse à l'architecture. La ressource principale est la partie opérative (celle effectuant les opérations arithmétiques). Elle fonctionne à son propre rythme en parallèle avec les ressources de transfert de données, appelés contrôleurs de DMA (abréviation anglo-saxonne de Dynamic Memory Access, traduit en français par "accès dynamique à la mémoire"). De plus, les ressources sont supposées téléchargeables.

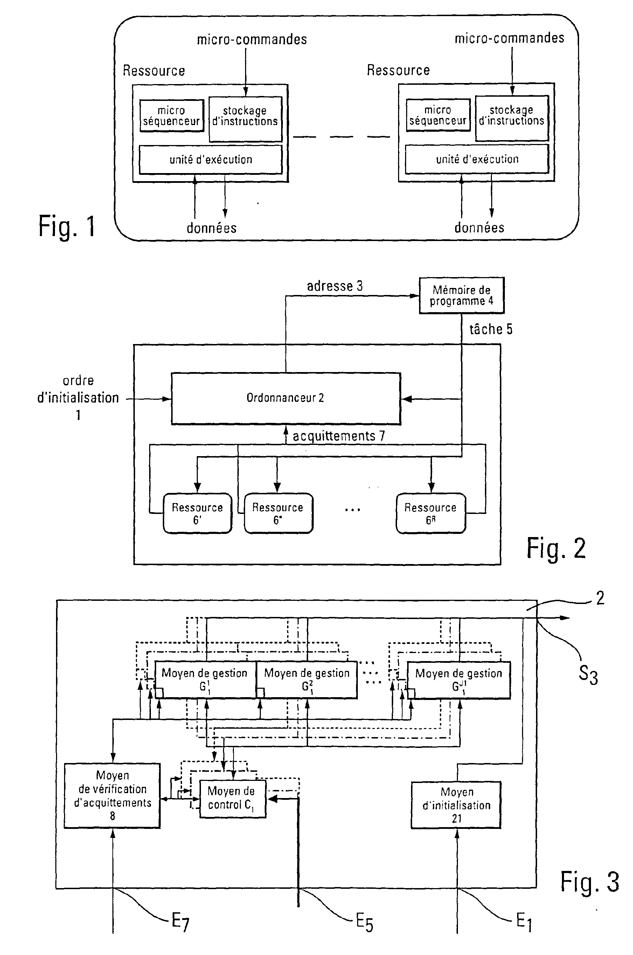

Comme le montre la figure 1, chaque ressource est capable de stocker, au départ, un jeu de microcommandes ou microinstructions propre et suffisant à l'exécution de sa tâche. Une intervention externe n'est nécessaire que pour fournir ces microcommandes et pour en initialiser l'exécution. Chaque ressource fonctionne dès lors de manière indépendante par rapport aux autres ressources. Elle peut signaler en retour la fin d'exécution de la tâche pour laquelle elle a été configurée. L'unité de stockage de microinstructions dans chaque ressource peut être vue comme une mémoire cache permettant de réduire le débit moyen d'entrée des microcommandes qui viennent de l'extérieur du circuit (difficulté classique des circuits à forte puissance de calcul -bande passante du programme-).

Afin de permettre l'exécution en parallèle de tâches par plusieurs ressources, un dispositif de gestion de l'exécution des tâches par les ressources suivant un schéma de planification statique (scheduling en terme anglo-saxon) est mis en oeuvre. La gestion de l'exécution par les ressources des microprogrammes se fait par séquencement à un ou deux niveaux.

La solution classique, employée en particulier dans les microprocesseurs de traitement du signal (DSP), consiste à inclure des directives d'ordonnancement dans la partie opérative du programme. Le séquencement se fait, alors, seulement à un niveau. Les microprogrammes sont spécifiques à chaque ressource, ce qui leur laissent la liberté d'être exécuter à leur rythme (en particulier, de répéter certaines séquences indépendamment de leurs voisins).

Comme le montre la figure 1, le microséquenceur propre à une ressource donnée déroule, alors, le microprogramme de cette ressource de façon indépendante par rapport aux autres ressources. La plupart des instructions sont destinées à la ressource de calcul. Certaines servent à paramétrer les ressources de transfert. Le principal inconvénient du séquencement à un niveau est la gestion simultanée par les microséquenceurs des différentes ressources de multiples activités produisant chacune des événements (fin d'une itération, fin de boucle...) désynchronisés avec l'activité des autres. D'où, la nécessité de pouvoir interrompre une activité pour en lancer une autre ou prendre en compte l'acquittement d'une tâche, ce qui donne lieu à une logique relativement complexe (gestion d'interruptions, sauvegarde de contexte...) induisant un coût de conception élevé.

Les applications envisagées par l'invention sont simples, elles laissent donc espérer des réalisations de circuit à hautes performances plus simple. C'est pourquoi, deux niveaux de séquencement distincts sont introduits :

- un niveau de séquencement rapide pour chacune des ressources, ne gérant pas d'événements asynchrones ;
- un niveau de séquencement global contrôlant le téléchargement du microprogramme dans chacune des ressources et leur lancement. L'utilisation de ce deuxième niveau permet une réduction du besoin en débit de microprogramme car le téléchargement peut s'effectuer en parallèle sans ralentir l'activité des ressources). Ce niveau de séquencement global peut-être plus ou moins élaboré.

Une élaboration consiste à dérouler un programme en forçant les instants de lancement des tâches sans prendre en compte les acquittements, il s'agit du lancement direct à des instants prédéterminés. Cette élaboration est plus simple et plus réactive, mais elle ne s'accommode d'aucune variation du temps d'exécution des tâches, et devient problématique dans le cas du multimode.

Une autre élaboration consiste à utiliser une structure de type coeur de processeur, mais il s'agit d'une approche volumineuse et moins réactive.

La présente invention permet de pallier ou, pour le moins, de réduire ces inconvénients en proposant un système peu complexe et de faible volume permettant de mettre en oeuvre un schéma de planification statique de gestion temps réel des ressources capable de prendre en compte l'acquittement d'une tâche.

A cet effet, l'invention a pour objet un système permettant la gestion d'une architecture multi-ressources dans laquelle plusieurs ressources peuvent exécuter simultanément différentes tâches, caractérisé en ce qu'il comporte :

- au moins un moyen de gestion de l'exécution d'une partie d'un ensemble ou sous-ensemble d'une ou plusieurs tâches,
- au moins un moyen de contrôle du ou des moyens de gestion de l'exécution dudit ensemble ou sous-ensemble de tâche(s),
- au moins un moyen de vérification de l'acquittement d'une ou plusieurs tâches données, chaque moyen de vérification d'acquittement étant associé à tout ou partie des moyens de gestion et/ou tout ou partie des moyens de contrôle et/ou tout ou partie des ressources,
- et/ou un moyen d'initialisation permettant d'initialiser tout ou partie des moyens précédents.

L'invention concerne un circuit intégré programmable caractérisé en ce qu'il comporte une mémoire programme unique comprenant :

- une entrée recevant les signaux d'adresse émis par ledit système et
- une sortie transmettant les tâches à exécuter audit système et aux ressources dudit circuit.

Le système de gestion d'une architecture multi-ressources proposé par la présente invention, nommé ordonnanceur par la suite, utilise une méthode de gestion d'une architecture multi-ressources dans laquelle plusieurs ressources peuvent exécuter simultanément différentes tâches caractérisée en ce qu'elle comporte au moins les étapes suivantes:

- la gestion de l'exécution d'au moins une partie d'un ensemble ou sous-ensemble d'une ou plusieurs tâches,
- le contrôle de la gestion de chaque partie d'au moins un ensemble ou sous-ensemble d'une ou plusieurs tâches,
- la vérification de l'acquittement de l'exécution d'au moins une tâche lors de la gestion et/ou du contrôle et/ou de l'exécution par les ressources,

l'initialisation de tout ou partie des étapes précédentes.

Les caractéristiques et avantages de l'invention apparaîtront plus clairement à la lecture de la description, faite à titre d'exemple, et des figures s'y rapportant qui représentent :

- Figure 1, un schéma de base d'une architecture multi-ressources selon l'état de l'art,
- Figure 2, un exemple de schéma de base d'une architecture multi-ressources à deux niveaux de séquencement selon l'invention,
- Figure 3, un exemple de schéma de principe de l'ordonnanceur selon l'invention,
- Figure 4, un exemple d'architecture de l'ordonnanceur selon l'invention,
- Figure 5, un exemple de réalisation détaillé d'une partie de l'ordonnanceur de la Figure 4,
- Figure 6, un exemple du principe de fonctionnement d'un ordonnanceur selon l'invention,
- Figure 7, un exemple de fonctionnement détaillé de l'ordonnanceur lors de l'exécution d'une directive d'ordonnancement,

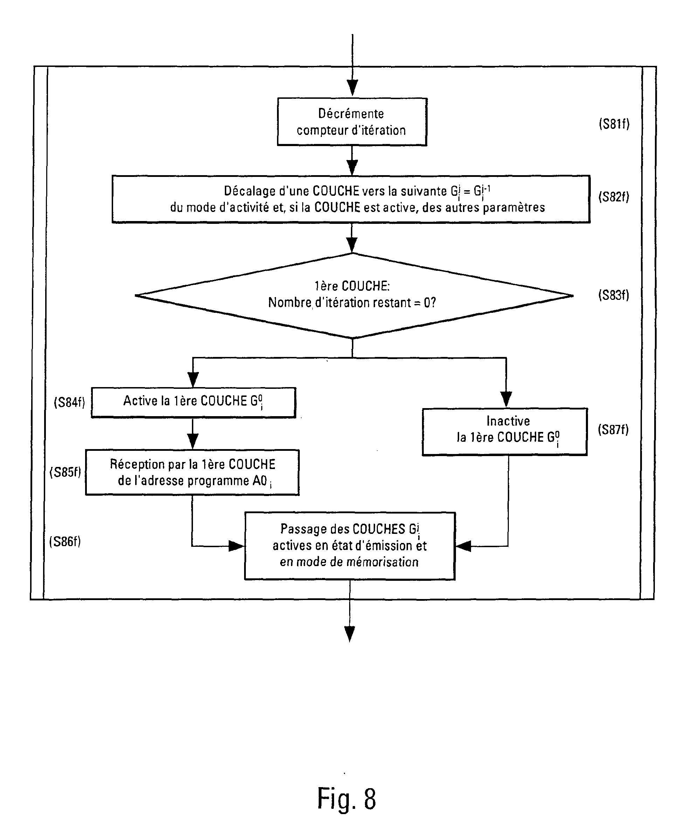

- Figure 8, un exemple de fonctionnement détaillé de l'ordonnanceur lors du passage à l'itération suivante.

La figure 2 donne un exemple de schéma de base d'une architecture multi-ressources selon l'invention. L'ordre d'initialisation 1 induit l'émission par l'ordonnanceur 2 d'un signal 3 contenant une adresse vers une mémoire programme unique 4. Le code stocké dans la mémoire de programme 4 est formé à partir :

- de séquences de code spécifiques aux ressources auxquelles elles sont destinées,
- de directives d'ordonnancement qui reflètent le schéma de planification des activités et destinées à l'ordonnanceur 2.

La tâche 5 se trouvant à l'adresse 3 est, donc, exécutée soit par l'une des ressources 6 s'il s'agit d'une instruction de traitement, soit par l'ordonnanceur 2 s'il s'agit d'une directive d'ordonnancement. Lorsqu'une ressource 6 à terminer l'exécution de l'instruction, elle en signale l'acquittement 7 à l'ordonnanceur 2.

La figure 3 présente un exemple de schéma de principe de l'ordonnanceur 2 selon l'invention. L'ordre d'initialisation 1 est reçu via l'entrée $E_1$ par le moyen d'initialisation 21 qui initialise l'ensemble des moyens de l'ordonnanceur 2 (non représenté sur la figure) et émet la première adresse 3 sur la sortie adresse $S_3$. La tâche à exécuter 5 lue à cette adresse 3 est reçue par les ressources et l'ordonnanceur 2 sur son entrée $E_5$ et transmise aux moyens de contrôle $C_i$ des moyens de gestion $G_i^j$ de l'exécution d'une ou des parties j d'un ensemble ou sous-ensemble de tâche(s) i. Les tâches 5 contiennent, par exemple, soit l'indication de leur destinataire, soit l'indication de type (calcul, transfert, ordonnancement). Lors de l'exécution d'une partie j d'un ensemble ou sous-ensemble de tâche(s) i, le moyen de gestion $G_i^j$ émet une adresse 3 sur la sortie $S_3$. Un moyen de vérification d'acquittement 8 vérifie si l'acquittement attendu par le moyen de gestion $G_{i'}^{j'}$, c'est à dire la fin d'exécution d'une ou plusieurs tâches attendue par le moyen de gestion $G_{i'}^{j'}$, est l'acquittement signalé par l'une des ressources 6 ou l'un des moyens de gestion $G_i^j$ ou l'un des moyens de contrôle $C_i$.

Vu d'une ressources particulière 6, celle-ci télécharge les microinstructions qui lui parviennent, et déclenche leur exécution dès que l'ordre de lancement lui parvient. Ces tâches 5 (microinstructions et ordre de lancement) sont lus séquentiellement dans la mémoire programme 4 à partir de l'adresse transmise par l'ordonnanceur 2. Le rôle de l'ordonannceur 2 est de gérer la suite d'adresses correspondante le bon nombre de fois, s'il s'agit d'une boucle, et aux moments opportuns. Les directives d'ordonnancement lui permettant d'initialiser et de gérer en parallèle autant de pointeurs d'adresses programme qu'il y a de partie j dans l'ensemble ou sous-ensemble de tâches i.

Prenons l'exemple de la gestion d'une architecture multi-ressources par un ordonnanceur 2 pour l'exécution d'un ensemble i de tâches formant une boucle i de programme. Un moyen de gestion $G_i^j$ d'une partie j d'un ensemble ou sous-ensemble i de tâches est alors un moyen de gestion de l'exécution de la partie ou étage j d'une boucle principale ou imbriquée i de programme, moyen de gestion nommé par la suite COUCHE $G_i^j$. Le moyen de contrôle Ci des COUCHES $G_i^j$ est nommé par la suite NOYAU $C_i$. A chacun des NOYAUX Ci correspond un niveau i de boucle différent. Il y a donc plusieurs NOYAUX $C_i$ en niveaux hiérarchiques pour les boucles imbriquées.

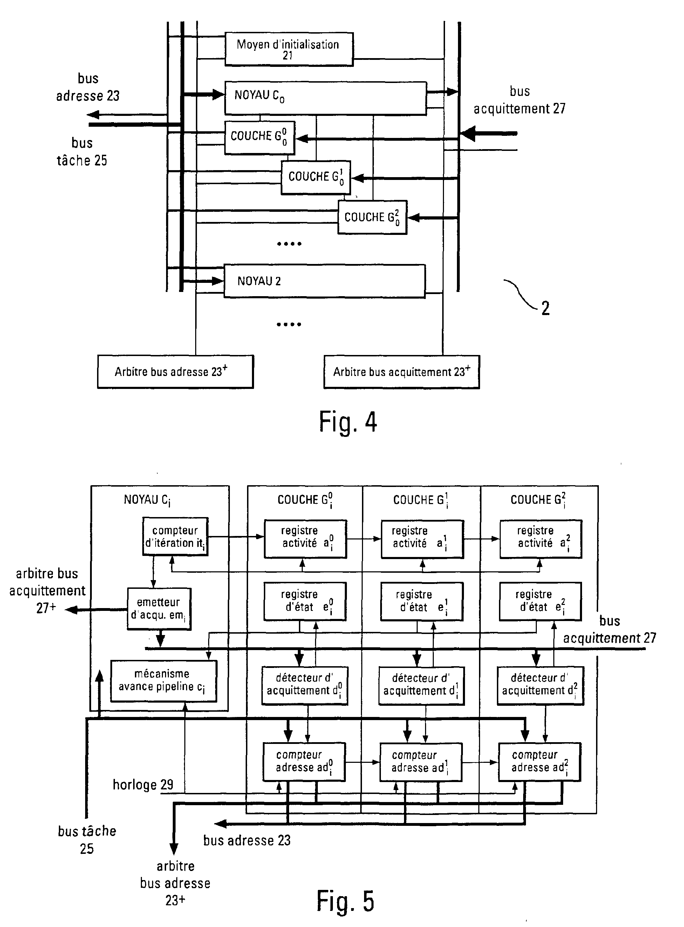

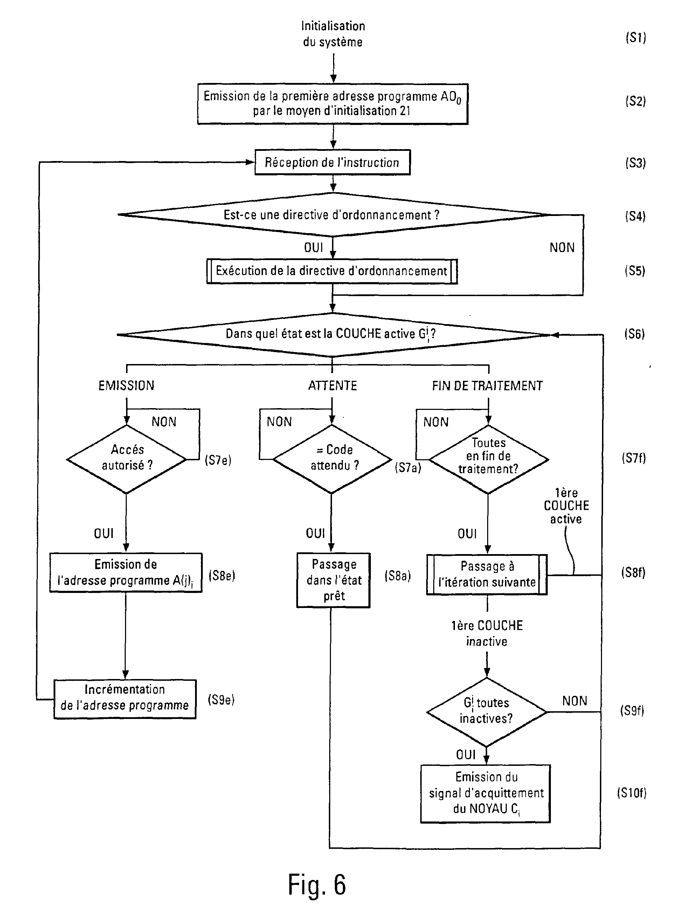

La figure 4 propose un exemple d'architecture de l'ordonnanceur 2 appliqué à la gestion de l'exécution d'une boucle i de programme. La figure 5 donne un exemple de réalisation détaillé d'un NOYAUX $C_i$, des COUCHES $G_i^j$ associées de l'architecture proposée par la figure 4.

Pour la gestion de l'exécution du nombre d'itération $N_i$ de la boucle i conformément aux paramètres d'initialisation de la boucle i, le NOYAU $C_i$ comporte un compteur d'itération $it_i$ qui est initialisé au nombre d'itération de la boucle i à effectuer $it_i = N_i$ et décrémenté $it_i = it_i -1$ à chaque nouvelle itération de la boucle i. Lorsque le compteur $it_i$ atteint la valeur 0 et dès que l'arbitre $27^+$ d'accès au bus d'acquittement 27 autorise l'accès, l'émetteur d'acquittement $em_i$ émet un signal d'acquittement pour signifier la fin du traitement de la boucle i.

L'autorisation d'accès au bus d'acquittement 27 délivré par l'arbitre $27^+$ donne droit à l'utilisation du bus d'acquittement 27 pendant un cycle pour émettre un signal d'acquittement 7. Dans le cas de plusieurs demandes simultanées, dues au fait que chaque ressource 6 et chaque NOYAU $C_i$ ayant terminée sa tâche veut envoyer un signal d'acquittement 7, l'autorisation de l'arbitre $27^+$ est fonction d'un ordre de priorité qui peut être fixe.

L'ensemble des COUCHES $G_i^j$ associées à un NOYAU $C_i$ constitue une chaîne de registre à décalage. Le rôle du NOYAU $C_i$ est de gérer une boucle i, de contrôler le pipeline associé (la chaîne formée par les COUCHES $G_i^j$ branchées en cascade) et de synchroniser les COUCHES $G_i^j$ entre elles. Pour cela, chaque NOYAU Ci comporte un mécanisme d'avance pipeline $c_i$. L'ensemble NOYAU $C_i$ et COUCHES $G_i^j$ associées est appelé SEQPAR.

Les informations que comporte chaque registre de cette chaîne sont un indicateur d'état e, un compteur d'adresse programme ad, un indicateur de l'état d'avancement du pipeline a et un indicateur de dimension (non représenté sur les figures).

L'ordonnanceur 2 comporte, alors, un ensemble de registres d'activité $a_i^j$ qui indique l'état d'avancement de l'exécution dans les étages j de la boucle i. Seules les COUCHES $G_i^j$ validées par le nombre d'étages $J_i$ de la boucle i peuvent être activées.

L'ordonnanceur 2 comporte, aussi, un ensemble de compteurs d'adresse $ad_i^j$ incrémentables qui pilotent chacun l'exécution d'un étage j de la boucle i. Chaque COUCHE $G_i^j$ gère une suite d'adresse $A[j]_i$ permettant ainsi aux étages j de la boucle i de s'exécuter en parallèle. Au sein d'une COUCHE $G_i^j$, le déroulement du programme s'effectue par incrémentation du compteur d'adresse $ad_i^j = ad_i^j +1$. L'incrémentation du compteur d'adresse $ad_i^j = ad_i^j +1$ s'effectue lors de l'émission du signal 3 contenant l'adresse $A[j]_i$ du compteur $ad_i^j$ sur le bus d'adresse programme 23. L'adresse de base $A0_i$ vient initialiser le compteur d'adresse $ad_i^0 = A0_i$ de la première COUCHE $G_i^0$, les compteurs d'adresse $ad_i^j$ des autres COUCHES $G_i^j$ sont initialisés par l'adresse $A[j-1]_i$ contenue dans le compteur d'adresse $ad_i^{j-1}$ de la COUCHE précédente $G_i^{J-1}$ au début d'une nouvelle itération.

L'indicateur d'état $e_i^j$ indique si la COUCHE $G_i^j$ est en repos, en émission, en attente ou en "fin" de traitement. Lorsqu'une COUCHE $G_i^j$ est active et son registre d'état $e_i^j$ est en émission, l'arbitre $23^+$ du bus adresse 23 note une demande d'accès à ce bus 23 pour cette COUCHE $G_i^j$ .

L'autorisation d'accès au bus d'adresse 23 délivré par l'arbitre $23^+$ donne droit à l'utilisation du bus d'adresse 23 tant que le demandeur maintient sa demande. Dans le cas de plusieurs demandes simultanées, dues au fait que chaque COUCHE $G_i^j$ peut vouloir émettre un signal d'adresse 3, l'autorisation de l'arbitre $23^+$ est fonction d'une ordre de priorité qui peut être fixe. La COUCHE $G_i^j$ ayant obtenue l'autorisation d'accès est dite en phase d'émission.

(Mode d'observation) Lorsqu'une COUCHE $G_i^j$ est active et son registre d'état $e_i^j$ est en attente, le détecteur d'acquittement $d_i^j$ de cette COUCHE $G_i^j$ observe les signaux d'acquittements 7 émis sur le bus d'acquittement 27 par les émetteurs d'acquittements $em_i$ des NOYAUX $C_i$ de l'ordonnanceur 2 et les ressources. Lorsque le signal d'acquittement 7 reçu correspond au code d'acquittement attendu, le registre d'état $e_i^j$ de la COUCHE $G_i^j$ sort de l'état d'attente.

(Mode de mémorisation) Lorsqu'un signal d'acquittement 7 est reçu par le détecteur d'acquittement $d_i^j$ de la COUCHE $G_i^j$ alors que son registre d'état $e_i^J$ n'est pas en attente, le détecteur d'acquittement $d_i^j$ mémorise le signal d'acquittement 7 reçu pour le prendre en compte lorsque le registre d'état $e_i^j$ se mettra en attente.

Quand toutes les COUCHES $G_i^j$ d'un NOYAU $C_i$ ont leurs registres d'état $e_i^j$ en "fin" de traitement, le mécanisme avance pipeline $c_i$ déclenche le décalage des registres de la chaîne associée à ce NOYAU $C_i$ selon l'horloge 29 fournie par ce NOYAU $C_i$ et décrémente le compteur d'itération $it_i$ de ce NOYAU $C_i$. Le contenu d'un registre est, donc, passé à la COUCHE suivante $G_i^{j+1}$ lorsque le pipeline i (la chaîne de registre à décalage associée à un NOYAU $C_i$) avance.

Il est ainsi possible de gérer l'exécution de la boucle i de programme en faisant suivre les indications d'adressage des données (contenues dans le registre indicateur de dimension non représenté) et du programme $ad_i^{j+1}$ $ad_i^j$ tout au long de cette chaîne. Ces indications peuvent aussi, de cette manière, être spécifiques à une récurrence donnée (programmation multimode). De ce fait, les codes liés à une itération sont forcément séquentiels. Une fois l'adresse de base $A0_i$ adressée, l'ordonnanceur 2 contrôle toutes les exécutions sans intervention externe.

Puisqu'il ne comporte que des registres et compteurs chaînés, l'ordonnanceur 2 proposé utilise un faible volume de matériel. De plus, puisqu'il ne comporte qu'un bus de tâche 25, le débit des tâches 5 nécessaire pour l'ordonnancement est peu élevé.

Afin d'initialiser l'exécution de la boucle i de programme, le moyen d'initialisation 21 reçoit l'ordre 1 d'initialiser les moyens de l'ordonnanceur 2 comme décrit dans l'étape (S1) du principe de fonctionnement de la figure 6, principe donné à titre d'exemple. Puis ce moyen d'initialisation 21 émet sur le bus d'adresse 23 un signal 3 contenant la première adresse issue d'un registre préalablement chargé (étape S2). L'ordonnanceur 2 reçoit la première tâche 5 lue à cette première adresse, qui comporte une directive d'ordonnancement c'est-à-dire une instruction destinée à l'ordonnanceur (étape S3 et S4). L'ordonnanceur 2 exécute alors cette directive (S5).

Dans notre exemple de réalisation, les directives d'ordonnancement qui reflètent le schéma de planification des activités sont au nombre de quatre :

- <u>l'instruction d'initialisation de boucle</u>: elle configure un des NOYAUX $C_i$ car elle initialise le registre d'activité $a_i^0$ en mode actif et comporte les paramètres d'initialisation de la boucle i (adresse de base $A0_i$ et/ou nombre d'itérations $N_i$ et/ou nombre d'étages $J_i$ de la boucle et/ou le niveau d'imbrication i de la boucle, et/ou le ou les codes d'acquittement de la boucle i et/ou des étages j de la boucle i...),

- <u>l'instruction d'attente</u>: elle identifie l'attente de la fin d'exécution d'une tâche et comporte, par exemple, le code d'acquittement attendu. Elle permet donc d'attendre qu'une tâche se termine et que la ressource 6 exécutant cette tâche soit libre avant d'exécuter la tâche suivante d'un même étage j. Elle peut aussi servir à programmer une attente entre tâches de deux étages j et j' différents d'une même boucle i ou de deux boucles imbriquées i et i'. Une attente de ce type se justifie, par exemple, par une dépendance de données entre les tâches ou encore par l'utilisation d'une ressource 6 commune.

- <u>l'instruction frontière entre deux étages j et j+1</u> : elle peut comporter le code d'acquittement de l'étage j, par exemple, et

- <u>l'instruction fin de boucle</u>: elle indique la fin de l'exécution du dernier étage $J_i$-1 d'une boucle i.

Les directives décrites ci-dessus à titre d'exemple comportent des paramètres associés et peuvent donner lieu à plusieurs mots consécutifs de la mémoire de programme 4. Une variante consisterait à utiliser pour ces 3 derniers types de directives un champ inséré dans les instructions d'initialisation et les instructions de traitement.

Les instructions de traitement comportent les paramètres nécessaire à la tâche (paramètres de configuration ou microinstructions de microprogramme). En effet, des informations doivent être fournies à la ressource 6 avant l'exécution. Ces informations peuvent être des paramètres (nombre d'itérations d'une boucle, paramètres d'adresse...) ou un microprogramme que la ressource 6 utilise éventuellement pour commander l'exécution. La programmation, dans ce dernier cas, est hiérarchique car le programme fait appel à des tâches qui utilisent elles-mêmes un microprogramme.

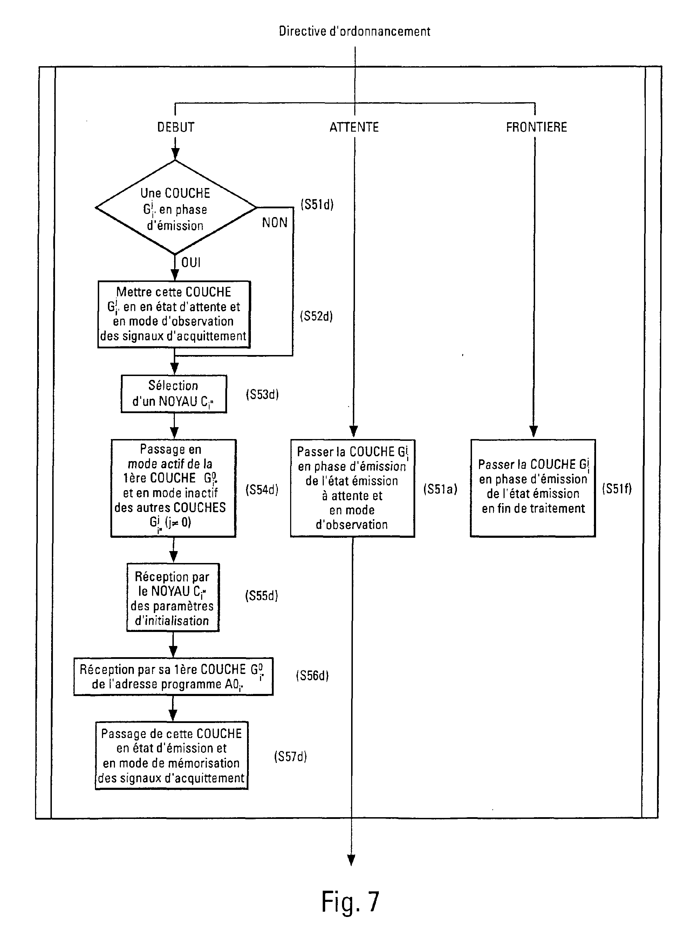

La figure 7 présente un exemple de principe de fonctionnement de l'ordonnanceur 2 lors de l'exécution de ces directives d'ordonnancement.

(DEBUT) La directive lue à la première adresse est une instruction d'initialisation de la boucle 0. L'exécution de cette instruction induit la sélection d'un NOYAU $C_0$ de l'ordonnanceur 2 (étape S53d). Le registre d'activité $a_0^0$ se met, alors, en mode actif et tous les autres des registres d'activité $a_0^j$ ($j \neq 0$) en mode inactif (étape S54d). Et, le mécanisme avance pipeline $c_0$ du NOYAU $C_0$ reçoit les paramètres d'initialisation de la boucle 0 (étape 55d). Ce mécanisme avance pipeline $c_0$ initialise le compteur d'itération au nombre d'itération à effectuer par la boucle 0 ($it_0 = N_0$) et met au repos les registres d'état $e_0^j$ des COUCHES $G_0^j$ associées au NOYAU $C_0$. Puis il transmet l'adresse de base au compteur d'adresse de la COUCHE $G_0^0$ ($ad_0^0 = AO_0$) (étape S56d), ce qui induit le passage du registre d'état $e_0^0$ de cette COUCHE $G_0^0$ en émission et le passage du détecteur d'acquittement $d_0^0$ de cette COUCHE $G_0^0$ en mode de mémorisation (étape S57d).

(EMISSION) La COUCHE $G_0^0$ est alors prête à émettre sur le bus d'adresse 23 l'adresse $A0_0$ contenue dans son compteur d'adresse $ad_0^0$ (étape S8e) dès qu'elle en sera autorisée par l'arbitre 23$^+$ d'accès à ce bus 23 (étape S7e). L'instruction contenue à l'adresse émise $A0_0$ est lue et exécutée par la ressource 6 ou l'ordonnanceur 2 auquel elle est destinée. Le compteur d'adresse $ad_0^0$ s'incrémente $ad_0^0 = ad_0^0 + 1$ (étape S9e). Tant que l'instruction lue n'est pas une directive d'ordonnancement (étape S3-S4), le registre d'état $e_0^0$ reste en émission (étape S6), la COUCHE $G_0^0$ conserve son accès au bus 23, une nouvelle adresse $A[0]_0$ contenu dans le compteur d'adresse $ad_0^0$ est émise (étape S8e) et le compteur d'adresse $ad_0^0$ incrémentée (étape S9e).

(ATTENTE) Si l'instruction lue est la directive d'ordonnancement "instruction d'attente" (étapes S3 à S5), le registre d'état $e_0^0$ de la COUCHE $G_0^0$ passe en attente et son détecteur d'acquittement $d_0^0$ en mode d'observation. Dés la réception du code d'acquittement attendu par la COUCHE $G_0^0$ du NOYAU $C_0$, la COUCHE $G_0^0$ passe en état d'émission, ce qui indique qu'elle demande à nouveau l'accès au bus d'adresse programme 23. Le processus se déroule alors de la même façon que lors de la première demande d'accès au bus d'adresse 23 par la COUCHE $G_0^0$. (FRONTIERE) Si l'instruction lue est la directive d'ordonnancement "instruction frontière entre deux étages" (étapes S3 à S5), le registre d'état $e_0^0$ de la COUCHE $G_0^0$ passe en "fin" de traitement.

(FIN DE TRAITEMENT) La COUCHE $G_0^0$ étant la seule active (soit parce que la boucle ne comporte qu'un seul étage 0, soit parce que les autres COUCHES $G_0^j$ ($j \neq 0$) ne sont pas activées), le mécanisme d'avance pipeline $c_0$ gère, alors, le passage à l'itération suivante (étape S8f). Pour cela, il décrémente le compteur d'itération $it_0 = it_0 - 1$ (étape S81f) et met au repos les registres d'état $e_0^j$ des COUCHES $G_0^j$ associées au NOYAU $C_0$. Puis il décale les registres d'activités $a_0^j = a_0^{j-1}$ ($j \geq 1$) et, pour les COUCHE $G_0^{j-1}$ actives, les compteurs d'adresse $ad_0^j = ad_0^{j-1}$ ($j \geq 1$) (étape S82f). Enfin, si le compteur d'itération $it_0$ a atteint la valeur 0, le registre d'activité $a_0^0$ de la première COUCHE $G_0^0$ du NOYAU $C_0$ est inactivé, ce qui signifie que cette COUCHE $G_0^0$ est dans une phase fin partielle de la boucle (étape S83f-S84f). Sinon, le registre d'activité $a_0^0$ de la première COUCHE $G_0^0$ du NOYAU $C_0$ est activé (étape S83f-S84f) et le mécanisme d'avance pipeline $c_0$ transmet l'adresse de base $A0_0$ au compteur d'adresse $ad_0^0$ de la première COUCHE $G_0^0$ (étape S85f). Les registres d'état $e_0^j$ des COUCHE $G_0^j$ active passe en émission et les détecteurs d'acquittements $d_0^j$ de ces COUCHES $G_0^J$ en mode de mémorisation (étape S86f).

Si la boucle 0 ne comporte qu'un seul étage 0 et que la COUCHE $G_0^0$ est en phase de fin partielle de la boucle, c'est à dire inactive et en état de fin traitement dans notre exemple, le NOYAU $C_0$ entre dans une phase de fin de boucle comportant l'émission du signal 7 d'acquittement de la boucle 0 par l'émetteur d'acquittement $em_0$ sur le bus d'acquittement 27 après accord de l'arbitre 27$^+$ (étape S9f-S10f).

Si la boucle 0 comporte plusieurs étages j, la deuxième COUCHE $G_0^1$ est alors active et le compteur d'adresse $ad_0^1$ de cette COUCHE $G_0^1$ contient la dernière adresse $A[0]_0$ calculée par le compteur d'adresse $ad_0^0$ de la première COUCHE $G_0^0$. Si la boucle comporte plusieurs itérations, la première COUCHE $G_0^0$ est toujours active et le compteur d'adresse $ad_0^0$ de cette COUCHE $G_0^0$ contient l'adresse de base $A0_0$.

(EMISSION) Les deux COUCHES $G_0^0$ et $G_0^1$ sont en état d'émission, c'est à dire demandeur d'accès au bus d'adresse 23. L'arbitre 23$^+$ autorise, par exemple, prioritairement la deuxième COUCHE $G_0^1$ (ordre de priorité allant dans ce cas de la dernière à la première COUCHE d'un NOYAU $C_i$). Le compteur d'adresse $ad_0^1$ de cette COUCHE $G_0^1$ émet alors son adresse $A[1]_0$ et s'incrémente $ad_0^1 = ad_0^1 + 1$ (étape S7e à S9e). L'instruction lue à l'adresse émise $A[1]_0$ est alors la première instruction du deuxième étage de la boucle 0 destinée à une des ressources 6 ou à l'ordonnanceur 2.

Tant que l'instruction lue n'est pas une directive d'ordonnancement (étape S3-S4), le registre d'état $e_0^1$ reste en émission (étape S6), la COUCHE $G_0^1$ conserve, donc, son accès au bus 23, une nouvelle adresse $A[1]_0$ est émise (étape S8e) et le compteur d'adresse $ad_0^1$ incrémentée (étape S9e).

(ATTENTE) Si l'instruction lue est la directive d'ordonnancement "instruction d'attente" (étapes S3 à S5), le registre d'état $e_0^1$ de la COUCHE $G_0^1$ passe en attente et son détecteur d'acquittement $d_0^1$ en mode d'observation (étape S51a). L'arbitre 22 accorde alors l'autorisation d'accès au bus d'adresse 23 à la première COUCHE $G_0^0$ qui était toujours demandeur. Dés la réception du code d'acquittement attendu par la deuxième COUCHE $G_0^1$ du NOYAU $C_0$, la COUCHE $G_0^1$ passe en état d'émission (étape S7a-S8a). Elle demande donc, à nouveau, l'accès au bus d'adresse 23. Le processus se déroule alors de la même façon que pour la première itération.

(FRONTIERE) Si l'instruction lue est la directive d'ordonnancement "instruction frontière entre deux étages" (étapes S3 à S5), le registre d'état $e_0^j$ (j = 0,1) de la COUCHE $G_0^j$ (j=0,1) en phase d'émission, c'est à dire en état d'émission et ayant l'autorisation d'accès au bus d'adresse 23, prend la valeur "fin" de traitement (étape S51f).

(FIN DE TRAITEMENT) Lorsque tous les registres d'état $e_0^j$ (j =0,1) des COUCHES actives $G_0^j$ (j=0,1) sont en "fin" de traitement, le mécanisme d'avance pipeline $c_0$ peut passer à l'itération suivante (étape S7f-S8f). Pour cela, il décrémente le compteur d'itération $it_0=it_0-1$ (étape S81f), décale les registres d'activités $a_0^j = a_0^{j-1}$ (j≥1) et, pour les COUCHE $G_0^{j-1}$ actives, les compteurs d'adresse $ad_0^j = ad_0^{j-1}$ (j ≥ 1) (étape S82f).

Si toutes les COUCHES $G_0^j$ (j = 0,1) sont en phase de fin partielle, c'est à dire que le compteur d'itération $it_0$ a atteint la valeur 0 et toutes les COUCHES $G_0^j$ (j = 0,1) sont inactives, l'exécution de la boucle 0 est terminée. Le NOYAU $C_0$ est alors dans une phase de fin de boucle qui comporte l'émission du signal d'acquittement de la boucle 0 sur le bus d'acquittement 27 par l'émetteur d'acquittement $em_0$ après autorisation de l'arbitre 27⁺.

Nous avons volontairement limiter l'exemple précédent à le contrôle par un NOYAU $C_i$ de deux COUCHES $G_i^j$ (j = 0,1) mais il est entendu qu'un NOYAU $C_i$ peut contrôler sur le même schéma que celui donner dans cet exemple une seule COUCHE ou plus de deux COUCHES $G_i^j$ (j∈ℵ).

(DEBUT) Lorsqu'un programme contient des boucles imbriquées, l'instruction lue à l'adresse émise A[j]ᵢ par une COUCHE $G_i^j$ peut être une instruction d'initialisation de boucle (étape S4-S5). Dans ce cas, ladite COUCHE $G_i^j$ en phase d'émission, c'est à dire en état d'émission et ayant accès au bus d'adresse programme, passe en état d'attente et son détecteur d'acquittement $d_i^j$ en mode d'observation du signal d'acquittement du nouveau NOYAU $C_{i'}$ (i'≠i) (étape 51d-53d).

Ce nouveau NOYAU $C_{i'}$ peut être sélectionné parmi ceux disponible, par exemple, en fonction des données contenues dans le champ NUMSEQ de l'instruction d'initialisation de la boucle i'. L'instruction d'initialisation de boucle fonctionnera de la même façon pour la boucle imbriquée i' que pour la boucle principale 0. Le nouveau NOYAU $C_{i'}$ pourra ainsi mettre en oeuvre plusieurs COUCHES $G_{i'}^j$ et fonctionner de la même façon que le NOYAU $C_0$ contrôlant la gestion de l'exécution de la boucle principale 0.

Les fonctionnalités de l'ordonnanceur 2 selon l'invention sont multiples, il peut donc, par exemple, gérer l'exécution d'une suite de tâches:

- *en multimode.* En effet, l'ordonnanceur 2 peut fonctionner en multimode car le moyen d'initialisation 21 peut permettre d'insérer une itération d'une boucle i' d'un programme différent de celui de la boucle i qu'il était en train de gérer car le fonctionnement multimode comporte comme sont nom l'indique plusieurs modes. Pour cela, il suffit, par exemple, que le moyen d'initialisation fournisse une adresse $A0_0$ différente correspondant à une boucle i' au lieu de la boucle i (cf l'étape S85f). Un mode correspond à une chaîne de traitement fixée à l'avance qui est appliquée sur un ensemble de données pendant un intervalle de temps appelé récurrence. Les récurrences successives peuvent supporter des modes différents, par exemple :

Récurrence N :
{
Boucle 0
Boucle 1
}

Récurrence N+1 :
{
Boucle 2
}

- *par anticipation.* La fonction d'anticipation de l'ordonnanceur 2 permet d'anticiper la programmation des ressources 6, c'est à dire éviter d'attendre la fin de l'exécution 7 d'une tâche 5 dans une ressource 6' pour programmer la tâche suivante pour la ressource suivante 6". Cela permet, en effet, alors qu'une tâche 5 vient d'être lancée, de programmer la ressource 6" pour la tâche suivante. La ressource 6" doit pour cela accepter deux zones de mémoire pour son programme. Pour programmer la première tâche pour chaque COUCHE $G_i^j$ lors de l'itération précédente, la chaîne de registre d'activité peut, par exemple, être doublée et tâche définie.

- *en tenant compte de l'itération pour accéder au données.* Un compteur d'itération multidimensionnel peut permettre d'associer à chaque itération des accès à des tableaux de données multidimensionnels. C'est un exemple d'utilisation d'un compteur d'itération $it_i$ pour calculer une adresse mémoire permettant d'accéder à des données différentes en fonction des itérations de la boucle. La valeur du compteur multidimensionnel $it_i[j]$ peut alors être passée de COUCHE $G_i^j$ en COUCHE $G_i^{j+1}$ grâce à un registre à décalage de la même que les registres d'activités $a_i^j$ et les compteurs d'adresse $ad_i^j$ sont décalés pour que la valeur corresponde bien à l'avancement de chaque COUCHE

$G_i^j$ de la chaîne dans la boucle i.

- *en associant un buffer de données à un NOYAU $C_i$*. Le compteur d'itération $it_i$ de chaque NOYAU $C_i$ permet d'avoir une gestion de buffer de données associé au pipeline (à la chaîne composée par le NOYAU $C_i$ et les COUCHES $G_i^j$ associées), ce qui signifie que la réservation d'une zone de mémoire pour chaque itération de la boucle i gérée par l'ordonnanceur 2 est possible. Lorsque l'itération est terminée, la zone mémoire peut être libérée pour une nouvelle itération soit en calculant la valeur du compteur d'itération $it_i$ modulo le nombre de COUCHES $G_i^j$ utilisées, soit en utilisant un compteur tournant au même rythme que le compteur d'itération $it_i$ du NOYAU $C_i$, dont la valeur est passée de COUCHE $G_i^j$ en COUCHE $G_i^{j+1}$ par un registre à décalage.

La liste des fonctionnalités présentées ci-dessus n'est pas limitatives.

Une première variante de l'ordonnanceur 2 réside dans le fait que les COUCHES G ne soient pas liées physiquement à un NOYAU $C_i$ particulier. N'importe quel NOYAU $C_i$ peut utiliser n'importe quelle COUCHE G en multiplexant les informations échangées entre un NOYAU $C_i$ et les COUCHES G.

Une seconde variante de l'ordonnanceur 2 consiste à regrouper les registres contenus dans les COUCHES $G_i^j$ sur un banc de registres généralisé accessible par toutes les COUCHES $G_i^j$ . Cette solution nécessite que tous les registres d'activité $a_i^j$ et tous les registres d'état $ad_i^j$ des COUCHES $G_i^j$ associées à un NOYAU $C_i$ puissent être lus à chaque cycle.

Une troisième variante consiste en ce que les directives d'ordonnancement peuvent soit faire l'objet d'une instruction au même titre que toutes les instructions programmant les ressources 6 ou bien faire seulement l'objet de champs d'instruction associés aux autres instructions.

## Revendications

**1.** Système (2) permettant la gestion d'une architecture multi-ressources dans laquelle plusieurs ressources (6) peuvent exécuter simultanément différentes tâches, **caractérisé en ce qu'**il comporte :

- au moins un moyen de gestion ($G_i^j$ ) de l'exécution d'une partie (j, $0 \leq$ j) d'un ensemble ou sous-ensemble (i, $0 \leq$ i) d'une ou plusieurs tâches,
- au moins un moyen de contrôle ($C_i$) du ou des moyens de gestion ($G_i^j$ ) de l'exécution dudit ensemble ou sous-ensemble (i) de tâche(s),
- au moins un moyen (8) de vérification de l'acquittement d'une ou plusieurs tâches données, chaque moyen de vérification d'acquittement (8) étant associé à tout ou partie des moyens de gestion ($G_i^j$ ) et/ou tout ou partie des moyens de contrôle ($C_i$) et/ou tout ou partie des ressources (6),
- et/ou un moyen d'initialisation (21) permettant d'initialiser tout ou partie des moyens précédents.

**2.** Système (2) selon la revendication précédente **caractérisé en ce que** chaque moyen de vérification d'acquittement (8) comporte:

- au moins un émetteur d'acquittement (em) associé à tout ou partie des moyens de gestion ($G_i^j$ ) et/ou tout ou partie des moyens de contrôle ($C_i$), chaque émetteur (em) émettant un signal (7) indiquant la fin de l'exécution, l'acquittement, d'une ou plusieurs tâches données,
- au moins un détecteur d'acquittement (d) associé directement ou indirectement à tout ou partie des moyens de gestion ($G_i^j$ ), chaque détecteur (d) recevant les signaux d'acquittements (7) de tous les émetteurs d'acquittement (em) et/ou de toutes les ressources (6).

**3.** Système (2) selon la revendication 2 **caractérisé en ce que** chaque moyen de vérification d'acquittement (8) comporte :

- au moins un émetteur d'acquittement ($em_i$) associé au moyen de contrôle ($C_i$), chaque émetteur ($s_i$) émettant un signal (7) indiquant la fin de l'exécution d'une ou plusieurs tâches données dont la gestion de l'exécution est contrôlée par ledit moyen de contrôle ($C_i$),
- au moins un détecteur d'acquittement ($d_i^j$ ) associé directement au moyen de gestion ($G_i^j$ ), chaque détecteur ($d_i^j$ ) recevant les signaux d'acquittements (7) de tous les émetteurs d'acquittements ($em_i$) et/ou de toutes les ressources (6).

**4.** Système (2) selon l'une des revendications 2 ou 3 **caractérisé en ce que** chaque moyen de vérification d'acquittement (8) comporte:

- un bus d'acquittement (27) unique transmettant tous les signaux d'acquittement (7) émis par chaque émetteur d'acquittement (em) ou ($em_i$) et/ou chaque ressource (6) à tous les détecteurs d'acquittement (d) ou ($d_i^j$), et
- un moyen d'arbitrage ($27^+$) de l'accès audit bus.

**5.** Système (2) selon l'une des revendications précédentes **caractérisé en ce qu'**il comporte :

- une ou plusieurs sorties ($S_3$) permettant d'émettre l'adresse (3) de la tâche à exécuter (5) comportant une liaison avec le moyen d'initialisation (21) et/ou les moyens de gestion ($G_i^j$) et/ou les moyens de contrôle ($C_i$),
- une ou plusieurs entrées ($E_5$) permettant de recevoir la tâche à exécuter (5) comportant une liaison avec tous les moyens de contrôle ($C_i$), et/ou
- une ou plusieurs entrées ($E_1$) permettant de recevoir l'ordre d'initialisation (1) et comportant une liaison avec le moyen d'initialisation (21), et/ou
- une ou plusieurs entrées ($E_7$) permettant de transmettre les signaux d'acquittement (7) des ressources (6) aux moyens de vérification d'acquittement (8) associés aux moyens de contrôle ($C_i$) et/ou aux moyens de gestion ($G_i^j$).

**6.** Système (2) selon la revendication précédente **caractérisé en ce qu'**il comporte :

- une seule entrée ($E_1$) permettant de recevoir l'ordre d'initialisation (1) comportant une liaison avec le moyen d'initialisation (21),
- une seule sortie ($S_3$) permettant d'émettre l'adresse (3) de la tâche à exécuter (5) comportant une liaison avec le moyen d'initialisation (21) et les moyens de gestion ($G_i^j$),
- une seule entrée ($E_5$) permettant de recevoir la tâche à exécuter (5) comportant une liaison avec les moyens de contrôle ($C_i$), et
- une seule entrée ($E_7$) permettant de recevoir les signaux d'acquittement (7) des ressources (6) comportant une liaison avec les détecteurs d'acquittement ($d_i^j$).

**7.** Système (2) selon la revendication précédente **caractérisé en ce qu'**il comporte :

- un bus d'adresse (23) unique reliant le moyen d'initialisation (21) et les moyens de gestion ($G_i^j$) à la sortie d'adresse ($S_3$), et
- un moyen d'arbitrage ($23^+$) de l'accès audit bus.

**8.** Système (2) selon l'une des revendications précédentes **caractérisé en ce que**, lorsque le moyen d'initialisation (21) reçoit un ordre d'initialisation (1), ledit moyen d'initialisation (21) :

- émet le premier signal d'adresse (3), adresse à laquelle se trouve une instruction d'initialisation,
- active les premiers moyens de gestion ($G_i^0$) de chaque moyen de contrôle ($C_i$) et
- inactive les autres moyens de gestion ($G_i^j$, j≠0)

**9.** Système (2) selon l'une des revendications précédentes **caractérisé en ce que** :

- l'adresse ($A[j]_i$) contenue dans un moyen de gestion ($G_i^j$) est émise si ledit moyen de gestion ($G_i^j$) est en phase d'émission, c'est à dire en état d'émission avec autorisation d'émettre, et **en ce que**
- cette émission induit l'incrémentation de ladite adresse ($A[j]_i = A[j]_i + 1$) contenue dans ledit moyen de gestion ($G_i^j$).

**10.** Système (2) selon la revendication précédente **caractérisé en ce qu'**un moyen de gestion ($G_i^j$) en état d'émission passe dans la phase d'émission de cet état lorsque ledit moyen d'arbitrage ($23^+$) de l'accès au bus d'adresse (23) autorise ledit moyen de gestion ($G_i^j$) à émettre sur ce bus (23).

**11.** Système (2) selon l'une des revendications précédentes **caractérisé en ce que**, lorsque la tâche à exécuter (5) reçue par les moyens de contrôle ($C_i$) comporte une instruction d'initialisation d'un ensemble ou sous-ensemble (i) de tâches :

- l'un des moyens de contrôle ($C_i$) parmi ceux disponibles reçoit les paramètres d'initialisation contenus dans cette instruction d'initialisation comportant le nombre de parties ($J_i$) dudit ensemble ou sous-ensemble (i) de tâches,

- le premier moyen de gestion ($G_i^0$) associé audit moyen de contrôle ($C_i$) reçoit l'adresse de base ($A0_i$),
- ledit premier moyen de gestion ($G_i^0$) passe en état d'émission, et
- le moyen de vérification d'acquittement (8) associé audit moyen de gestion ($G_i^0$) se met en mode de mémorisation des acquittements.

12. Système (2) selon la revendication précédente **caractérisé en ce que**, lorsque la tâche à exécuter (5) reçue par les moyens de contrôle comporte une instruction d'initialisation d'un sous-ensemble (i') de tâche(s), et qu'un moyen de gestion ($G_i^j$) de l'exécution d'une partie (j) d'un ensemble ou sous-ensemble (i, i≠i') de tâche(s) est en phase d'émission, le moyen de gestion $G_i^j$ en état d'émission passe dans un état d'attente.

13. Système (2) selon l'une des revendications précédentes **caractérisé en ce que**, lorsque la tâche à exécuter (5) reçue par les moyens de contrôle ($C_i$) comporte une instruction de mise en attente le moyen de gestion ($G_i^j$) en phase d'émission passe dans un état d'attente.

14. Système (2) selon l'une des revendications 12 ou 13 **caractérisé en ce que**,

- lorsqu'un moyen de gestion ($G_i^j$) passe en état d'attente, le moyen de vérification d'acquittement (8) associé audit moyen de gestion $G_i^j$ se met en mode d'observation de l'acquittement attendu, c'est à dire l'acquittement du sous-ensemble (i') de tâche(s) indiquée par l'instruction d'initialisation ou de l'acquittement de la ou des tâches indiquées par l'instruction d'attente, sachant qu'un moyen de vérification d'acquittement (8) en mode d'observation effectue les opérations:

  - d'observation des acquittements et
  - de détection de l'acquittement attendu parmi ceux mémorisés lors du mode de mémorisation et ceux observés, et **en ce que**

- lorsque le moyen de vérification d'acquittement (8) associé audit moyen de gestion $G_i^j$ détecte l'acquittement attendu,

  - ledit moyen de gestion ($G_i^j$) passe dans un état d'émission,
  - le moyen de vérification d'acquittement (8) associé audit moyen de gestion ($G_i^j$) se met en mode de mémorisation des acquittements.

15. Système (2) selon l'une des revendications précédentes **caractérisé en ce que**, lorsque la tâche à exécuter (5) reçue par les moyens de contrôle ($C_i$) comporte une instruction indiquant la frontière entre deux parties (j) et (j+1), le moyen de gestion ($G_i^j$) en état d'émission passe dans un état de fin de traitement.

16. Système (2) selon la revendication précédente **caractérisé en ce que**, si un ensemble ou sous-ensemble (i) de tâche est une boucle (i) de programme et si tous les moyens de gestion ou COUCHES ($G_i^j$) actifs d'un moyen de contrôle ou NOYAU ($C_i$) sont dans un état de fin de traitement:

- ledit NOYAU ($C_i$) passe de la gestion d'une itération ($it_i$) à la gestion de l'itération suivante ($it_i$+1) de la boucle (i),
- chaque COUCHE ($G_i^j$) dudit NOYAU ($C_i$) prend au moins une partie des paramètres de la COUCHE précédente ($G_i^{j-1}$) comportant, si ladite COUCHE ($G_i^j$) n'est pas en état fin de traitement de l'itération ($N_i$), de ladite boucle (i), l'adresse ($A[j]_i=A[j-1]_i$).
- la première COUCHE ($G_i^0$) reçoit l'adresse de basse ($A0_i$) si ladite première COUCHE ($G_i^0$) n'est pas en état fin de traitement de l'itération ($N_i$). de ladite boucle (i),
- chaque COUCHE ($G_i^j$) ayant reçu une adresse $A[j]_i$ passe dans un état d'émission,
- et les moyens de vérification d'acquittement (8) associés aux COUCHES ($G_i^j$) en état d'émission se mettent en mode de mémorisation des acquittements,

17. Système (2) selon l'une des revendications 15 ou 16 **caractérisé en ce que**, lorsque l'ensemble des moyens de gestions ($G_i^j$) sont en fin de traitement et, dans le cas d'une boucle (i), en état fin de traitement de l'itération (Ni) de ladite boucle (i), le moyen de contrôle ($C_i$) indique l'acquittement de l'exécution de l'ensemble ou sous-ensemble (i).

18. Circuit intégré programmable selon l'une des revendications précédentes **caractérisé en ce qu'**il comporte une mémoire programme unique (4) comprenant :

- une entrée recevant les signaux d'adresse (3) émis par ledit système (2) et
- une sortie transmettant les tâches à exécuter (5) audit système (2) et aux ressources (6) dudit circuit.

**19.** Méthode de gestion d'une architecture multi-ressources dans laquelle plusieurs ressources (6) peuvent exécuter simultanément différentes tâches **caractérisée en ce qu'**elle comporte au moins les étapes suivantes:

- la gestion de l'exécution d'au moins une partie (j, $0 \leq j$) d'un ensemble ou sous-ensemble (i, $0 \leq i$) d'une ou plusieurs tâches,
- le contrôle de la gestion de chaque partie (j) d'au moins un ensemble ou sous-ensemble (i) d'une ou plusieurs tâches,
- la vérification de l'acquittement de l'exécution d'au moins une tâche lors de la gestion et/ou du contrôle et/ou de l'exécution par les ressources (6),
- l'initialisation de tout ou partie des étapes précédentes.

**20.** Méthode selon la revendication précédente **caractérisée en ce que** la vérification d'acquittement comporte:

- l'émission d'un signal (7) indiquant la fin de l'exécution (l'acquittement) d'une ou plusieurs tâches données tâche lors de la gestion et/ou du contrôle, et
- la détection du signal d'acquittement attendu lors de la gestion comprenant la réception des signaux d'acquittements (7) émis lors de la gestion et/ou du contrôle et/ou de l'exécution.

**21.** Méthode selon l'une des revendications 19 ou 20 **caractérisée en ce que**, l'initialisation comporte au moins l'émission de la première adresse à laquelle se trouve une instruction d'initialisation.

**22.** Méthode selon l'une des revendication 19 à 21 **caractérisée en ce que** la gestion de l'exécution d'une partie (j) d'un ensemble ou sous-ensemble (i) en phase d'émission, c'est à dire en état d'émission avec autorisation d'émettre, comporte :

- l'émission de l'adresse $A[j]_i$ à laquelle se trouve la tâche à exécuter (5),
- le passage simultané de l'adresse $A[j]_i$ à l'adresse $A[j]_i+1$.

**23.** Méthode selon l'une des revendications 19 à 22 **caractérisée en ce que** :

- le contrôle de la gestion de l'exécution des parties (j) d'un ensemble ou sous-ensemble (i) de tâche(s) comporte:

  - l'exécution d'une instruction d'initialisation dudit ensemble ou sous-ensemble (i) de tâche(s),
  - la réception, lors de ladite exécution, des paramètres d'initialisation dudit ensemble ou sous-ensemble (i) de tâche(s) contenus dans cette instruction d'initialisation, lesdits paramètres comportant le nombre de parties $(J_i)$ dudit ensemble ou sous-ensemble (i) de tâche(s) et l'adresse de base $(A0_i)$,
  - la transmission de ladite adresse de base $A0_i$ reçue, et **en ce que**

- la gestion de l'exécution de la première partie dudit ensemble ou sous-ensemble (i) de tâche(s) comporte:

  - la réception de ladite adresse de base $A0_i$ transmise lors du contrôle de la gestion dudit ensemble ou sous-ensemble (i) de tâche(s),
  - le passage à l'état d'émission déclenché par ladite réception,

- la vérification d'acquittement comporte le passage en mode de mémorisation des acquittements déclenché par ledit passage en état d'émission.

**24.** Méthode selon la revendication précédente **caractérisée en ce que**, lorsque l'instruction d'initialisation d'un sous-ensemble (i') est exécutée lors du contrôle de gestion de l'exécution d'un sous-ensemble (i') et que la gestion de l'exécution d'une partie (j) d'un ensemble ou sous-ensemble (i, i≠i') est en phase d'émission:

- le contrôle de gestion de l'exécution de la dite partie (j) dudit ensemble ou sous-ensemble (i) comporte l'exécution de ladite instruction d'initialisation du sous-ensemble (i'), et
- la gestion de ladite partie (j) de l'ensemble ou sous-ensemble (i) comporte le passage à l'état d'attente déclenché par l'exécution, lors dudit contrôle de la gestion de l'exécution de l'ensemble ou sous-ensemble (i), de ladite instruction d'initialisation du sous-ensemble (i') dont l'acquittement est attendu.

**25.** Méthode selon l'une des revendications 19 à 24 **caractérisée en ce que** :

- le contrôle de la gestion de l'exécution d'un ensemble ou sous-ensemble (i) comporte l'exécution d'une instruction de mise en attente si la gestion de l'exécution d'une partie (j) dudit ensemble ou sous-ensemble (i) est en phase d'émission, et **en ce que**
- la gestion de l'exécution de ladite partie (j) dudit ensemble ou sous-ensemble (i) en phase d'émission comporte le passage à l'état d'attente déclenché par ladite exécution indiquant la ou les tâches dont l'acquittement est attendu.

**26.** Méthode selon l'une des revendications 24 ou 25 **caractérisée en ce que**:

- la vérification d'acquittement comporte le passage en mode d'observation déclenché par le passage en état d'attente de la gestion de l'exécution d'une partie (j) d'un ensemble ou sous-ensemble (i) de tâche(s); le passage en mode d'observation comportant au moins:

  - l'observation des acquittements et
  - la détection de l'acquittement attendu parmi ceux mémorisés lors du mode de mémorisation et ceux observés, **en ce que**

- la gestion de l'exécution d'une partie (j) d'un ensemble ou sous-ensemble (i) de tâche(s) en état d'attente comporte le passage à l'état d'émission déclenché par ladite détection de l'acquittement attendu, et **en ce que**
- la vérification d'acquittement comporte le passage en mode de mémorisation des acquittements déclenché par ledit passage en état d'émission.

**27.** Méthode selon l'une des revendications 19 à 26 **caractérisée en ce que** :

- si la gestion de l'exécution d'une partie (j) d'un ensemble ou sous-ensemble (i) est en phase d'émission, le contrôle de la gestion de l'exécution dudit ensemble ou sous-ensemble (i) de tâche(s) comporte l'exécution d'une instruction indiquant la frontière entre deux parties (j) et (j+1), et **en ce que**
- la gestion de l'exécution de ladite partie (j) dudit ensemble ou sous-ensemble (i) comporte le passage à l'état fin de traitement déclenché par ladite exécution de l'instruction indiquant frontière entre ladite partie (j) et la partie suivante (j+1).

**28.** Méthode selon la revendication précédente **caractérisée en ce que**, si
l'ensemble ou sous-ensemble (i) de tâche est une boucle de programme et si la gestion de l'exécution de toutes les parties ou étages (j) de la boucle (i) sont en état fin de traitement :

- le contrôle de ladite gestion de l'exécution de la boucle (i) comporte:

  - le passage à l'itération suivante $(it_i)=(it_i)+1$,
  - la transmission de l'adresse $(A[j]_i)$ obtenue lors de la gestion de l'exécution d'un étage (j) de ladite boucle (i), si la gestion de l'exécution de l'étage suivant (j+1) de ladite boucle (i) n'est pas en état fin de traitement de l'itération $(N_i)$, de ladite boucle (i).
  - la transmission de l'adresse de base $(A0_i)$, si la gestion de l'exécution du premier étage de ladite boucle (i) n'est pas en état fin de traitement de l'itération $(N_i)$. de ladite boucle (i), et **en ce que**:

- la gestion d'un étage (j+1) de ladite boucle (i) comporte:

  - la réception, le cas échéant, de ladite adresse transmise: adresse de base $(A0_i)$ pour le premier étage et adresse $(A[j+1]_i)=(A[j]_i)$ provenant de la gestion de l'exécution de l'étage précédent (j) de ladite boucle (i), et
  - le passage en état d'émission déclenché par ladite réception,

- la vérification d'acquittement comporte le passage en mode de mémorisation des acquittements déclenché par ledit passage en état d'émission.

**29.** Méthode selon l'une des revendications 27 ou 28 **caractérisée en ce que**, le contrôle de la gestion de l'exécution d'un ensemble ou sous-ensemble (i) de tâche(s) comporte le signalement de l'acquittement dudit ensemble ou sous-ensemble (i) de tâche(s) dès que la gestion de chaque partie (j) dudit ensemble ou sous-ensemble (i) de tâche(s) est en en état fin de traitement et, dans le cas d'une boucle (i), en état fin de traitement de l'itération ($N_i$) de ladite boucle (i).

## Fig. 1

micro-commandes

Ressource

| micro séquenceur | stockage d'instructions |

unité d'exécution

données

micro-commandes

Ressource

| micro séquenceur | stockage d'instructions |

unité d'exécution

données

## Fig. 2

adresse 3

Mémoire de programme 4

tâche 5

ordre d'initialisation 1

Ordonnanceur 2

acquittements 7

| Ressource 6' | Ressource 6" | ... | Ressource $6^R$ |

## Fig. 3

2

$S_3$

| Moyen de gestion $G_1^1$ | Moyen de gestion $G_1^2$ | ... | Moyen de gestion $G_1^{J1}$ |

Moyen de vérification d'acquittements 8

Moyen de control $C_1$

Moyen d'initialisation 21

$E_7$

$E_5$

$E_1$

## Fig. 4

Moyen d'initialisation
21

bus
adresse 23

NOYAU $C_0$

bus
acquittement 27

bus
tâche 25

COUCHE $G_0^0$

COUCHE $G_0^1$

COUCHE $G_0^2$

....

NOYAU 2

2

....

Arbitre bus adresse $23^+$

Arbitre bus acquittement $23^+$

## Fig. 4

NOYAU $C_i$

COUCHE $G_i^0$

COUCHE $G_i^1$

COUCHE $G_i^2$

compteur
d'itération $it_i$

registre
activité $a_i^0$

registre
activité $a_i^1$

registre
activité $a_i^2$

arbitre bus
acquittement
$27^+$

emetteur
d'acqu. $em_i$

registre
d'état $e_i^0$

registre
d'état $e_i^1$

registre
d'état $e_i^2$

bus
acquittement 27

mécanisme
avance pipeline $c_i$

détecteur d'
acquittement $d_i^0$

détecteur d'
acquittement $d_i^1$

détecteur d'
acquittement $d_i^2$

compteur
adresse $ad_i^0$

compteur
adresse $ad_i^1$

compteur
adresse $ad_i^2$

horloge 29

bus tâche
25

bus adresse 23

arbitre
bus adresse
$23^+$

## Fig. 5

Initialisation
du système (S1)

Emission de la première adresse programme $AO_0$
par le moyen d'initialisation 21 (S2)

Réception de l'instruction (S3)

Est-ce une directive d'ordonnancement ? (S4)

OUI NON

Exécution de la directive d'ordonnancement (S5)

Dans quel état est la COUCHE active $G_i^j$ ? (S6)

EMISSION ATTENTE FIN DE TRAITEMENT

NON NON NON

Accés
autorisé ? (S7e)

= Code
attendu ? (S7a)

Toutes
en fin de
traitement? (S7f)

1ère
COUCHE
active

OUI OUI OUI

Emission de
l'adresse programme $A(j)_i$ (S8e)

Passage
dans l'état
prêt (S8a)

Passage à
l'itération suivante (S8f)

1ère COUCHE
inactive

Incrémentation
de l'adresse programme (S9e)

$G_i^j$ toutes
inactives? (S9f)

NON

OUI

Emission du
signal d'acquittement
du NOYAU $C_i$ (S10f)

# Fig. 6

Directive d'ordonnancement

DEBUT      ATTENTE      FRONTIERE

Une COUCHE $G_{i^*}^j$ en phase d'émission    NON   (S51d)

OUI

Mettre cette COUCHE $G_{i^*}^j$ en en état d'attente et en mode d'observation des signaux d'acquittement   (S52d)

Sélection d'un NOYAU $C_{i^*}$   (S53d)

Passage en mode actif de la 1ère COUCHE $G_{i^*}^0$ et en mode inactif des autres COUCHES $G_{i^*}^j$ (j ≠ 0)   (S54d)

Réception par le NOYAU $C_{i^*}$ des paramètres d'initialisation   (S55d)

Réception par sa 1ère COUCHE $G_{i^*}^0$ de l'adresse programme $A0_{i^*}$.   (S56d)

Passage de cette COUCHE en état d'émission et en mode de mémorisation des signaux d'acquittement   (S57d)

Passer la COUCHE $G_i^j$ en phase d'émission de l'état émission à attente et en mode d'observation   (S51a)

Passer la COUCHE $G_i^j$ en phase d'émission de l'état émission en fin de traitement   (S51f)

# Fig. 7

```
                    ┌─────────────────────────┐
                    │       Décrémente        │         (S81f)
                    │   compteur d'itération   │
                    └─────────────────────────┘
                                 │
                                 ▼
```

$$\text{Décalage d'une COUCHE vers la suivante } G_i^j = G_j^{j-1}$$
du mode d'activité et, si la COUCHE est active, des autres paramètres    (S82f)

1ère COUCHE:
Nombre d'itération restant = 0?    (S83f)

(S84f)   Active la 1ère COUCHE $G_j^0$

Inactive
la 1ère COUCHE $G_i^0$    (S87f)

(S85f)   Réception par la 1ère COUCHE
de l'adresse programme $AO_i$

(S86f)   Passage des COUCHES $G_i^j$
actives en état d'émission et
en mode de mémorisation

# Fig. 8

18

**Office européen des brevets**

**RAPPORT DE RECHERCHE EUROPEENNE**

Numéro de la demande

EP 01 40 1345

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | KALAVADE A ET AL: "Software environment for a multiprocessor DSP" PROCEEDINGS 1999 DESIGN AUTOMATION CONFERENCE (CAT. NO. 99CH36361), PROCEEDINGS 1999 DESIGN AUTOMATION CONFERENCE, NEW ORLEANS, LA, USA, 21-25 JUNE 1999, 'en ligne! 21 - 25 juin 1999, pages 827-830, XP002160797 1999, Piscataway, NJ, USA, IEEE, USA ISBN: 1-58113-092-9 ACM Digital Library Extrait de l'Internet: <URL:http://www.acm.org/pubs/articles/proceedings/dac/309847/p827-kalavade/p827-kalavade.pdf> 'extrait le 2001-02-19! * abrégé * * page 827, colonne de gauche, ligne 1 - page 828, colonne de droite, ligne 4 * * page 829, colonne de gauche, ligne 42 - page 830, colonne de droite, ligne 30 * --- | 1,19 | G06F9/46 |
| A | EP 0 483 970 A (IBM) 6 mai 1992 (1992-05-06) * abrégé * * colonne 2, ligne 52 - colonne 3, ligne 35; figure 3 * * colonne 7, ligne 29 - colonne 8, ligne 43 * * colonne 11, ligne 54 - colonne 14, ligne 3 * --- -/-- | 1,19 | DOMAINES TECHNIQUES RECHERCHES (Int.Cl.7) G06F |

Le présent rapport a été établi pour toutes les revendications

| Lieu de la recherche | Date d'achèvement de la recherche | Examinateur |
|---|---|---|
| LA HAYE | 1 août 2001 | Wiltink, J |

## Office européen des brevets

### RAPPORT DE RECHERCHE EUROPEENNE

Numéro de la demande

EP 01 40 1345

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | GUNZINGER A ET AL: "Achieving super computer performance with a DSP array processor" PROCEEDINGS. SUPERCOMPUTING '92. (CAT. NO.92CH3216-9), MINNEAPOLIS, MN, USA, 16-20 NOV. 1992, 'en ligne! 16 - 22 novembre 1992, pages 543-550, XP000358019 1992, Los Alamitos, CA, USA, IEEE Comput. Soc. Press, USA ISBN: 0-8186-2630-5 ACM Digital Library Extrait de l'Internet: <URL:http://www.acm.org/pubs/articles/proc eedings/supercomputing/147877/p543-gunzing er/p543-gunzinger.pdf> 'extrait le 2001-02-19! * abrégé * * page 545, colonne de gauche, ligne 29 - page 546, colonne de gauche, ligne 10; figure 4 * ----- | 1,19 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 1 août 2001 | Wiltink, J |

**ANNEXE AU RAPPORT DE RECHERCHE EUROPEENNE**
**RELATIF A LA DEMANDE DE BREVET EUROPEEN NO.**          EP 01 40 1345

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-08-2001

| Document brevet cité au rapport de recherche | Date de publication | Membre(s) de la famille de brevet(s) | | Date de publication |
|---|---|---|---|---|
| EP 0483970 A | 06-05-1992 | WO | 9208192 A | 14-05-1992 |
| | | HU | 65534 A,B | 28-06-1994 |
| | | IL | 99744 A | 26-05-1995 |
| | | JP | 4289955 A | 14-10-1992 |
| | | PL | 166975 B | 31-07-1995 |
| | | SK | 41393 A | 07-07-1993 |
| | | US | 5539896 A | 23-07-1996 |
| | | ZA | 9108427 A | 26-08-1992 |

EPO FORM P0460

Pour tout renseignement concernant cette annexe : voir Journal Officiel de l'Office européen des brevets, No.12/82